# EUROPEAN PATENT APPLICATION

(11) **EP 1 995 295 A1**
(43) Date of publication of application: **26.11.2008**
(21) Application number: 07713570.5
(22) Date of filing: 09.03.2007
(51) Int. Cl.: C09K 11/62, C09K 11/08, H01J 29/20, H01J 31/12

(54) **PHOSPHOR FOR DISPLAY AND FIELD EMISSION DISPLAY**

(30) Priority: 10.03.2006 JP 2006065058
(71) Applicant: Canon Kabushiki Kaisha, Tokyo 146-8501 (JP)
(72) Inventor: YOKOSAWA, Nobuyuki, Tokyo 105-8001 (JP); YAMAGUCHI, Kenichi, Tokyo 105-8001 (JP)
(74) Representative: TBK-Patent
(86) International application number: PCT/JP2007/000188
(87) International publication number: WO 2007/105370

(57) **Abstract**

Disclosed is a phosphor for displays which is **characterized by** being composed of a europium-activated thiogallate phosphor represented by the following chemical formula: SrGa₂S₄:Eu. This phosphor is also **characterized by** containing no gallium sulfide (Ga₂S₃) and being a green phosphor which emits light when excited by an electron beam having an accelerating voltage of 5-15 kV. Consequently, this invention provides a phosphor for displays having high luminance, which emits light when excited by a pulse electron beam having an accelerating voltage of 5-15 kV.

## Description

### Technical Field

The present invention relates to a phosphor for displays and a field emission display incorporating the phosphor.

### Background Art

With advent of the multimedia age, for displays which are core devices of digital networks, achievement of increased screen size, higher definition, and compatibility with various sources such as computers is required.

Among displays, field emission displays (FEDs) that use field emission elements such as field emission cold cathodes are currently being increasingly and extensively studied and developed as large-screen thin digital devices that can display various types of information at high density and with high definition.

The basic display principle of the FEDs is the same as that of cathode ray tubes (CRTs), i.e., a phosphor is excited by electron beams so that the phosphor emits light. However, the accelerating voltage (excitation voltage) of the electron beam is lower than that of CRTs, and the current density per unit time obtainable by the electron beam is also low. Thus, in order to achieve a sufficient luminance, a significantly long excitation time is required compared to CRTs. This means that the quantity of charges injected per unit area needs to be increased to achieve a particular luminance, and this shortens the lifetime of the phosphor. Consequently, sufficient luminance and lifetime have not been obtained with zinc sulfide-based phosphors that have been used in CRTs in the related art. Under these circumstances, a phosphor for FEDs that has high luminance is desired (e.g., refer to Patent Document 1).

An europium-activated thiogallate phosphor represented by a chemical formula, SrGa₂S₄:Eu has been known to exhibit a relatively good emission intensity particularly when irradiated with an electron beam having an excitation voltage of 5 kV or less. Since this phosphor has a good luminescent color, it is known as a phosphor that can be used in general CRTs although the luminance thereof is not as good as that of the zinc sulfide phosphor.

However, in FEDs having an excitation voltage of 5 to 15 kV, it is not likely that this phosphor can be directly used. In order to improve the emission characteristics of the FEDs, development of a phosphor for FEDs that has excellent emission characteristics is desired. Patent Document 1: Japanese Patent Laid-Open No. 2002-226847

### Disclosure of Invention

The present invention is made to overcome the above-described problems and aims to provide a phosphor for a displays having a high luminance. It is also an object of the present invention to provide a field emission display (FED) having a high luminance and excellent display characteristics such as color reproducibility by using such a phosphor.

A phosphor for a display of the present invention includes a europium (Eu)-activated thiogallate phosphor substantially represented by a chemical formula, SrGa₂S₄:Eu free of gallium sulfide represented by a chemical formula, Ga₂S₃, in which the phosphor is a green phosphor that emits light when excited by an electron beam having an accelerating voltage of 5 to 15 kV.

A field emission display of the present invention includes phosphor layers including blue light emitting phosphor layers, green light emitting phosphor layers, and red light emitting phosphor layers; an electron source configured to irradiate the phosphor layers with an electron beam having an accelerating voltage of 5 to 15 kV; and an envelope configured to vacuum seal the electron source and the phosphor layers, in which the green light emitting phosphor layers include the phosphor for the display of the present invention described above.

Since the phosphor for the display of the present invention contains, as a matrix, strontium thiogallate (SrGa₂S₄), i.e., a ternary compound of strontium (Sr), gallium (Ga), and sulfur (S), and, as an activator, europium (Eu) whose electronic state makes transition from the ground level to an excited level at a high probability, excellent luminous efficiency is achieved by irradiation with a pulse electron beam having an accelerating voltage of 5 to 15 kV, and high luminance is obtained.

Compared to zinc sulfide phosphors and oxysulfide phosphors that have been used as the phosphors for CRTs in the related art, long lifetime is achieved. Thus, when the phosphor for the display is used, a thin, flat display, such as a FED, having a high luminance, excellent display characteristics, and a long lifetime can be realized. Brief Description of Drawings
[Fig. 1] A cross-sectional view schematically showing a FED according to a second embodiment of the present invention.
[Fig. 2] A graph showing an XRD (X-ray diffraction) pattern of a europium-activated strontium thiogallate phosphor obtained in Example 1 of the present invention.
[Fig. 3] A graph showing an XRD (X-ray diffraction) pattern of a phosphor obtained in Comparative Example of the present invention.

### Best Modes for Carrying Out the Invention

Preferred embodiments of the present invention will now be described. The present invention is not limited to the embodiments described below.

A first embodiment of the present invention is a phosphor composed of a ternary compound containing strontium (Sr) of Group II, gallium (Ga) of Group III, and sulfur (S) of Group VI in the periodic table with europium (Eu) serving as an activator. The phosphor is substantially free of gallium sulfide represented by Ga₂S₃. To be more specific, the phosphor is a europium-activated strontium thiogallate phosphor represented by chemical formula SrGa₂S₄:Eu and emits green light when excited by a pulse electron beam having an accelerating voltage of 5 to 15 kV and preferably 7 to 12 kV.

In this phosphor, europium is an activator that forms the luminescent center and exhibits a high luminous efficiency due to its high transition probability. Europium serving as the activator is preferably contained in an amount of 0.1 to 5.0 mol% relative to strontium thiogallate (SrGa₂S₄), which is the matrix of the phosphor. A more preferred Eu content range is 1.5 to 4.0 mol%. It is not preferable that the Eu content be outside this range since the luminance and luminescent chromaticity would be degraded.

The europium-activated strontium thiogallate phosphor of the first embodiment can be made by the following process, for example.

That is, phosphor starting materials containing elements constituting the matrix and the activator of the phosphor or compounds containing such elements are weighed so that a desired composition (SrGa₂S₄:Eu) is achieved, and then dry-mixed. To be more specific, appropriate amounts of strontium sulfide and gallium oxyhydroxide are mixed, and an appropriate amount of activator (or a compound containing activator) is added to the resulting mixture to prepare the material of the phosphor. Instead of strontium sulfide, an acidic strontium material such as strontium sulfate may be used. As the activator, europium sulfide or europium oxalate may be used.

Here, the mixture ratio of Sr to Ga as elements is set to 1:2, which is a stoichiometric ratio. According to past reports, addition of excess Ga is required to achieve sufficient reaction; however, if Ga is added in excess, gallium sulfide represented by Ga₂S₃ will be produced as a byproduct and remain in the SrGa₂S₄ phosphor. This is not preferable.

A heat-resistant container such as an alumina crucible or a quartz crucible is then filled with the phosphor material and adequate amounts of sulfur and activated carbon. In adding and mixing sulfur, it is preferable to mix an amount of sulfur slightly larger than that of the phosphor by using a blender or the like so that after the mixed material is filled into the heat resistant container, the surface thereof is covered with sulfur. The material is then fired in a sulfurizing atmosphere such as a hydrogen sulfide atmosphere or a sulfur vapor atmosphere or a reducing atmosphere (e.g., a 3-5% hydrogen/balance nitrogen atmosphere).

The firing conditions are important for controlling the crystal structure of the phosphor matrix (SrGa₂S₄). The firing temperature is preferably in the range of 700°C to 900°C. The time of firing depends on the firing temperature set but is 60 to 180 minutes. After firing, cooling is preferably conducted in the same atmosphere as firing. Subsequently, after the fired material is washed with water such as ion exchanged water and dried, a process such as sieving is conducted, if necessary, to remove coarse particles so as to obtain an europium-activated strontium thiogallate phosphor (SrGa₂S₄:Eu).

The europium-activated strontium thiogallate phosphor of the first embodiment can also be synthesized from starting materials such as metallic gallium and strontium sulfide or strontium sulfate. Firing may be conducted under the above-described firing conditions (temperature and time).

It is also possible to fire the phosphor material in a rotary heating furnace as follows. That is, the phosphor material is loaded into a tubular rotary furnace disposed obliquely with respect to the horizontal direction and rotated about the center axis so that the phosphor material passes through the furnace continuously. The phosphor material is then rapidly heated to a predetermined firing temperature in the heating furnace while the being tumbled in the rotating heating furnace so that the phosphor material moves from the upper part to the lower part of the furnace. With this operation, the phosphor material is fired by being heated for a sufficient and necessary time. Subsequently, the fired phosphor material is continuously discharged from the heating furnace and rapidly cooled.

In such a firing process, the interior of the tubular heating furnace and the cooling unit for the fired material discharged from the heating furnace are preferably retained in a state with oxygen removed therefrom (oxygen-free state). In particular, the interior of the heating furnace is preferably retained in a hydrogen sulfide atmosphere.

According to this firing process, the phosphor material moving inside the heating furnace is rapidly heated while being tumbled, and heat energy is uniformly applied to the phosphor material in an oxygen-free hydrogen sulfide atmosphere or the like. Thus, firing can be completed in a shorter time than when a crucible is used for firing. Consequently, a phosphor with smaller particle diameter can be obtained without degrading the luminance. Moreover, since aggregation of the phosphor particles can be suppressed, there is no need to conduct further pulverization after firing. Thus, deterioration of the phosphor resulting from the pulverization step can be suppressed. Since the phosphor material is heated and fired while being tumbled in the heating furnace, phosphor particles substantially spherical in shape and uniform in particle diameter can be obtained.

According to the firing method that uses the rotary heating furnace or the crucible, a europium-activated strontium thiogallate (SrGa₂S₄:Eu) phosphor substantially free of gallium sulfide (Ga₂S₃) can be obtained. That this SrGa₂S₄:Eu phosphor is substantially free of Ga₂S₃ can be confirmed by analyzing an XRD (X-ray diffraction) pattern. In other words, if gallium sulfide (Ga₂S₃) is contained in the phosphor, a peak indicating the existence of Ga₂S₃ will appear in the diffraction angle (2θ) range of 27° to 29° in the XRD pattern. Absence of this peak would confirm that the phosphor is substantially free of Ga₂S₃.

The europium (Eu)-activated strontium thiogallate phosphor of the first embodiment thus obtained is a phosphor that emits green light when irradiated with a pulse electron beam at an accelerating voltage of 5 to 15 kV and preferably 7 to 12 kV and has a good luminous efficiency, thereby achieving a high luminance. A high-luminance FED can be realized by using this phosphor.

A green phosphor layer can be formed by using the green phosphor of the first embodiment and an existing printing or slurry method. In order to form a phosphor layer by a printing method, the phosphor of the first embodiment is mixed with a binder solution containing, e.g., polyvinyl alcohol, n-butyl alcohol, ethylene glycol, and water, to prepare a phosphor paste, and the phosphor paste is applied onto a substrate by a method such as screen-printing or the like. A baking process is then conducted in which the applied paste is heated at 500°C for 1 hour to decompose and remove the binder components.

In a slurry method, the green phosphor of the first embodiment is mixed with pure water, polyvinyl alcohol, a photosensitive material such as ammonium dichromate, a surfactant, and the like to prepare a phosphor slurry, and the phosphor slurry is then applied onto a substrate with a spin coater or the like and dried. The dried phosphor slurry is irradiated with ultraviolet light or the like to conduct exposure and development, and dried. As a result, a green phosphor layer having an appropriate pattern is formed.

Next, a field emission display (FED) in which a green light emitting phosphor layer is formed by using the green phosphor of the first embodiment is described.

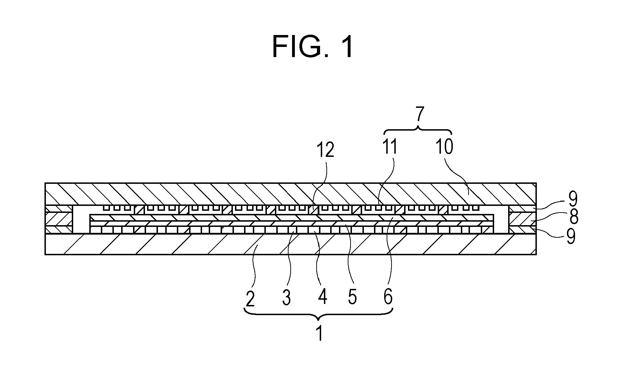

Fig. 1 is a cross-sectional view showing a relevant part of an embodiment of the FED. In Fig. 1, reference numeral 1 indicates a face plate. The face plate 1 has phosphor layers 3 formed on a transparent substrate such as a glass substrate 2. The phosphor layers 3 include blue light emitting phosphor layers, green light emitting phosphor layers, and red light emitting phosphor layers formed to correspond pixels, and these layers are isolated from one another with a light absorbing layer 4 composed of a black conductive material filling the gaps between these layers. The green light emitting phosphor layers are formed by using the green phosphor of the first embodiment described above. The blue light emitting layers and the red light emitting layers are respectively composed of a blue light emitting zinc sulfide phosphor and a red light emitting oxysulfide phosphor known in the art.

The thickness of each green light emitting phosphor layer formed of the green phosphor of the first embodiment is preferably 1 to 10 µm and more preferably 6 to 10 µm. The thickness of the green light emitting phosphor layer is limited to 1 µm or more since it is difficult to form a phosphor layer less than 1 µm in thickness with phosphor particles uniformly aligned. A green light emitting phosphor layer having a thickness of more than 10 µm is not suitable for practical application since the luminance is low. In order to eliminate differences in height among the phosphor layers 3 of respective colors, the thicknesses of the blue and red light emitting phosphor layers are preferably set to be equal to that of the green light emitting phosphor layer.

The green light emitting phosphor layers, blue light emitting phosphor layers, and red light emitting phosphor layers, and the light absorbing layer 4 that isolates these layers from one anther are arranged in a repeating pattern in the horizontal direction, and the portion where the phosphor layers 3 and the light absorbing layer 4 exist is the image display region. Various patterns, e.g., a dot pattern or a stripe pattern, are applicable as the pattern of arranging the phosphor layers 3 and the light absorbing layer 4.

A metal back layer 5 is formed on the phosphor layers 3. The metal back layer 5 is a metal film such as an aluminum film and improves the luminance by reflecting light travelling in the rear plate direction described below among light generated in the phosphor layers 3. The metal back layer 5 also gives conductivity to the image display region of a face plate 1 to prevent charge from accumulating therein and functions as an anode electrode with respect to the electron source of the rear plate. The metal back layer 5 has a function of preventing the phosphor layer 3 from being damaged by ions generated by ionization of gas remaining in the face plate 1, the vacuum container (envelope), etc., by the electron beam. The metal back layer 5 also has effects of preventing the gas generated in the phosphor layer 3 during use from being released to the interior of the vacuum container (envelope) and preventing the degree of vacuum from decreasing.

A getter film 6 composed of an evaporable getter material containing Ba or the like is formed on the metal back layer 5. The gas generated during use is efficiently absorbed in the getter film 6. The face plate 1 and a rear plate 7 are arranged to face each other with a gap therebetween, and this gap is hermetically sealed by a supporting frame 8. The supporting frame 8 is bonded to the face plate 1 and the rear plate 7 with an adhesive 9 composed of a frit glass, In, an In alloy, or the like so as to form a vacuum container, i.e., an envelope, with the face plate 1, the rear plate 7, and the supporting frame 8.

The rear plate 7 includes a substrate 10 constituted by an insulating substrate such as a glass substrate or a ceramic substrate or a silicon substrate; and many electron emitting elements 11 formed on the substrate 10. The electron emitting elements 11 are provided with, for example, field emission cold cathodes or surface-conduction electron-emitting elements and interconnections (not shown in the drawing) are formed on a surface of the rear plate 7 on which the electron emitting elements 11 are formed. That is, many electron emitting elements 11 are arranged in a matrix corresponding to the phosphors of the respective pixels, and interconnections intersecting one another (X-Y interconnections) are provided to drive the electron emitting elements 11, which are arranged in the matrix, row by row. Signal input terminals and row selecting terminals not shown in the drawing are provided to the supporting frame 8. These terminals correspond to the intersecting interconnections (X-Y interconnections) of the rear plate 7 described above. In increasing the size of a flat FED, there is a risk of bowing because of its flat, thin shape. In order to prevent bowing and impart strength relative to the atmospheric pressure, an atmospheric pressure supporting member (spacer) 12 may be provided between the face plate 1 and the rear plate 7, if necessary.

According to the FED of the second embodiment having green light emitting phosphor layers formed of the green phosphor of the first embodiment, the luminance and color purity of light emitted by irradiation with the pulse electron beam having an accelerating voltage of 5 to 15 kV, more preferably 7 to 12 kV are high, and satisfactory display characteristics can be achieved.

Specific examples of the present invention will now be described.

### Example 1

Starting materials containing elements constituting the matrix of the phosphor and the activator or compounds containing such elements were weighed so that the stoichiometric ratio of the composition shown in Table 1 (SrGa₂S₄:Eu, Eu content being 2 mol%) was achieved, and thoroughly mixed. The resulting phosphor material was filled in a quartz crucible with adequate amounts of sulfur and activated carbon, and fired in a hydrogen sulfide atmosphere. The firing condition was 800°C × 60 min.

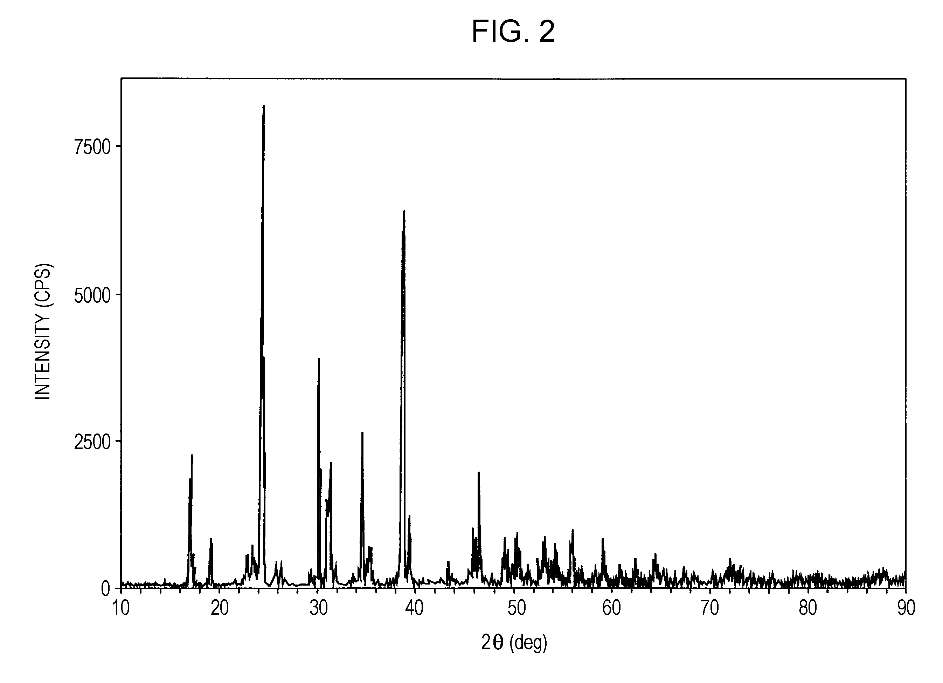

The resulting fired material was washed with water, dried, and sieved to obtain a europium (Eu)-activated strontium thiogallate phosphor (SrGa₂S₄:Eu). An XRD (X-ray diffraction) spectrum of the obtained europium-activated strontium thiogallate was measured, and an XRD (X-ray diffraction) pattern shown in Fig. 2 was obtained. No peak was found in the diffraction angle (2θ) range of 27° to 29° in the XRD pattern, which confirmed that the europium-activated strontium thiogallate phosphor obtained in Example did not contain gallium sulfide (Ga₂S₃).

Next, a phosphor layer 10 µm in thickness was formed by screen printing using the resulting phosphor, and a metal back layer composed of aluminum was formed thereon by a lacquer method.

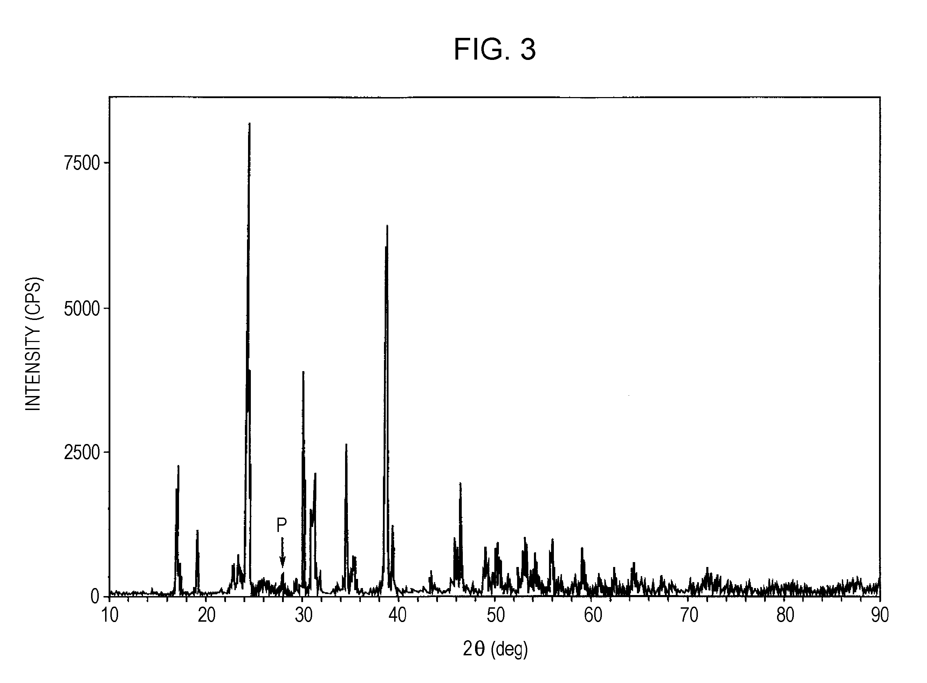

A phosphor of Comparative Example was synthesized as in Example 1 except that, during the synthesis, the ratio of Ga to Sr was set slightly in excess of Ga compared to the stoichiometric ratio Ga:Sr of 2:1, i.e., the ratio was set to 2.05: 1. The XRD (X-ray diffraction) of the resulting phosphor is shown in Fig. 3. As is apparent from the pattern, a peak (P) indicative of gallium sulfide (Ga₂S₃) is found in the diffraction angle (2θ) range of 27° to 29° in the XRD pattern. Next, a green phosphor layer was formed in the same manner by using a phosphor containing gallium sulfide (Ga₂S₃), and a metal back layer composed of aluminum was formed thereon by a lacquer method.

The luminance and luminescent chromaticity of the phosphor layers of Example 1 and Comparative Example were studied. The luminance was measured by irradiating each phosphor layer with an electron beam having an accelerating voltage of 10 kV and a current density of 40 mA/cm². The luminance was determined as a relative value by assuming the luminance of the phosphor layer of Comparative Example to be 100.

The luminescent chromaticity was measured with SR-3 by Topcon Corporation. Measurement of the luminescent chromaticity was conducted in a darkroom in which the chromaticity during emission was unaffected by outside factors. The measurement results of the luminance and the luminescent chromaticity are shown in Table 1.

**Table 1**

| | Phosphor composition | Luminance (%) | Luminescent chromaticity (x, y) |
|---|---|---|---|
| Example 1 | SrGa₂S₄:Eu | 115 | 0.270, 0.678 |
| Comparative Example | SrGa₂S₄:Eu (with Ga₂S₃) | 100 | 0.276, 0.679 |

As is apparent from Table 1, compared to the phosphor of Comparative Example containing a trace amount of gallium sulfide (Ga₂S₃), the europium (Eu)-activated strontium thiogallate phosphor obtained in Example 1 exhibits a significantly improved luminance when irradiated with a pulse electron beam having a low accelerating voltage (5 to 15 kV) and a high current density. Moreover, the table also shows that the phosphor also has a sufficiently high luminescent chromaticity.

### Example 2

The europium (Eu)-activated strontium thiogallate phosphor (SrGa₂S₄:Eu) obtained in Example 1, a known blue light emitting phosphor (ZnS:Ag,Al), and a known red light emitting phosphor (Y₂O₂S:Eu) were used to form phosphor layers on a glass substrate to thereby form a face plate. The face plate was assembled with a rear plate having many electron emitting elements with a supporting frame, and the gap between the plates was hermetically sealed under vacuuming. It was confirmed that the FED thus produced exhibited excellent color reproducibility including luminance and that satisfactory luminance characteristic was exhibited after 1000 hours of driving under rated operation.

### Industrial Applicability

According to the phosphor for a display of the present invention, green light having a high luminance and a satisfactory color purity can be emitted by irradiation with a pulse electron beam having an accelerating voltage of 5 to 15 kV and a high current density. Thus, a flat, thin display having excellent display characteristics such as high luminance and color reproducibility can be realized by using this green phosphor.

## Claims

1. A phosphor for a display, comprising a europium (Eu)-activated thiogallate phosphor substantially represented by a chemical formula, SrGa₂S₄:Eu free of gallium sulfide represented by a chemical formula, Ga₂S₃, wherein the phosphor is a green phosphor that emits light when excited by an electron beam having an accelerating voltage of 5 to 15 kV.

2. The phosphor for the display according to claim 1, wherein an XRD (X-ray diffraction) pattern of the europium-activated thiogallate phosphor has no peak indicative of gallium sulfide (Ga₂S₃) in a diffraction angle (2θ) range of 27° to 29°.

3. A field emission display comprising phosphor layers including blue light emitting phosphor layers, green light emitting phosphor layers, and red light emitting phosphor layers; an electron source configured to irradiate the phosphor layers with an electron beam having an accelerating voltage of 5 to 15 kV; and an envelope configured to vacuum seal the electron source and the phosphor layers,
wherein the green light emitting phosphor layers include the phosphor for the display according to claim 1 or 2.
